**Europäisches Patentamt**

**European Patent Office**

**Office européen des brevets**

(11) Veröffentlichungsnummer : **0 147 686
B1**

# EUROPÄISCHE PATENTSCHRIFT

(45) Veröffentlichungstag der Patentschrift :
02.03.88

(51) Int. Cl.⁴ : **H 02 P 7/00, H 02 P 5/16**

(21) Anmeldenummer : **84114785.3**

(22) Anmeldetag : **05.12.84**

(54) **Drehzahlregelschaltung für einen Gleichstrommotor.**

(30) Priorität : 04.01.84 DE 3400198

(43) Veröffentlichungstag der Anmeldung :
**10.07.85 Patentblatt 85/28**

(45) Bekanntmachung des Hinweises auf die Patenterteilung : 02.03.88 Patentblatt 88/09

(84) Benannte Vertragsstaaten :
**BE CH DE FR GB IT LI NL SE**

(56) Entgegenhaltungen :
**DE-A- 3 204 943
GB-A- 2 107 088
ELECTRONIC DESIGN, Band 25, Nr. 26, Dezember
1977, Seiten 142-145, Rochelle Park, US; D.F. GEIGER:
"Drive servos with a switching amplifiier"
ELECTRICAL DESIGN NEWS, Band 28, Nr. 10, Mai
1983, Seiten 195-202, Boston, Massachusetts, US; J.
WILLIAMS u.a.: "Use motor-drive IC to solve tricky
design problems"**

(73) Patentinhaber : **Siemens Aktiengesellschaft Berlin
und München
Wittelsbacherplatz 2
D-8000 München 2 (DE)**

(72) Erfinder : **Kern, Hans, Dipl.-Ing.
Schuckertstrasse 14
D-8000 München 70 (DE)**

EP 0 147 686 B1

# Beschreibung

Die Erfindung betrifft eine Drehzahlregelschaltung für einen Gleichstrommotor gemäß dem Oberbegriff des Patentanspruchs 1.

Gleichstrommotore werden insbesondere für Antriebszwecke in Textendgeräten der Kommunikationstechnik verwendet. Durch den Gleichstrommotor werden beispielsweise Schreibwalzen, Druckerwagen und Typenräder positioniert.

In dem Buch « Theorie und Anwendungen des PLL » von Roland Best, 2. Aufl., ist auf Seite 93 eine Drehzahlregelschaltung für einen Gleichstrommotor beschrieben. Hierbei übernimmt der Gleichstrommotor mit seinem Drehzahlgeber und einem spannungsgesteuerten Regler für den Motorstrom die Rolle des spannungsgesteuerten Oszillators (VCO).

Der Gleichstrommotor ist einseitig an Masse geschaltet. Da die Abbremsung nur durch Reibung und die elektromotorische Kraft bewirkt werden, können Drehzahlschwankungen, insbesondere bei niedrigen Drehzahlen, nur langsam ausgeregelt werden.

Aus der DE-OS-3 204 943 ist ein Steuersystem für einen hin- und herbewegenden Motor bekannt. Unter Verwendung eines Phasenkomparators, an dem Bezugsimpulse und zur Drehgeschwindigkeit des Motors synchrone Ausgangsimpulse anliegen, und mit einem, einer Ladungspumpschaltung nachgeschalteten Filter wird eine Regelspannung erzeugt. Diese Regelspannung ist positiv, wenn die Ausgangsimpulse den Bezugsimpulsen in der Phase nacheilen, sie ist negativ, wenn die Ausgangsimpulse voreilen, und sie ist Null, wenn die Ausgangsimpulse mit den Bezugsimpulsen in Phase sind.

Weiter ist eine Ansteuerschaltung mit einer Schaltbrücke beschrieben. Der Motor wird hierbei mit einer Drehzahl angetrieben, die der Spannung am Steuereingang der Ansteuerschaltung entspricht.

Es ist bekannt, den Baustein MC 14568 B als Phasenkomparator in Frequenz-Synthesizer-Schaltungen zu verwenden.

Es ist Aufgabe der Erfindung, eine Drehzahlregelschaltung für einen Gleichstrommotor anzugeben, die auch bei niedrigen Drehzahlen und größeren Lastwechseln eine schnelle Drehzahlregelung bewirkt.

Diese Aufgabe wird erfindungsgemäß durch die im Patentanspruch 1 angegebenen Merkmale gelöst.

Ein Vorteil der erfindungsgemäßen Drehzahlregelschaltung ist, daß auf einfache Weise eine Wahl der Drehrichtung des Gleichstrommotors möglich ist.

Es ist weiter vorteilhaft, daß die Drehzahlregelschaltung weitgehend aus integrierten Schaltkreisen, und damit einfach aufgebaut ist.

Im folgenden wird die Erfindung anhand eines in den Zeichnungen dargestellten Ausführungsbeispiels erläutert. Dabei zeigen :

Fig. 1 ein Blockschaltbild der erfindungsgemäßen Drehzahlregelschaltung,

Fig. 2 ein Detailschaltbild eines Filters und

Fig. 3 ein Diagramm zur Erläuterung der Wirkungsweise der Drehzahlregelschaltung.

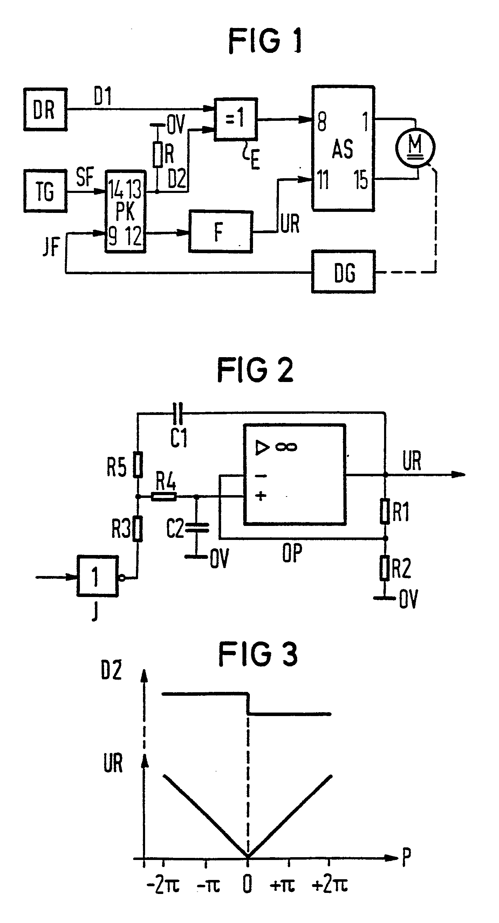

Das in Fig. 1 dargestellte Blockschaltbild enthält einen Drehrichtungsgeber DR, einen Taktgeber TG, einen Phasenkomparator PK, ein Filter F, ein Exklusiv-ODER-Verknüpfungsglied E, eine Ansteuerschaltung AS, einen Gleichstrommotor M, und einen Drehzahlgeber DG. Der Gleichstrommotor M wird von der Ansteuerschaltung AS bestromt. Der Drehzahlgeber DG erzeugt in bekannter Weise eine Ist-Frequenz Pulsfolge, die der Drehzahl des Gleichstrommotors M proportional ist und an den Phasenkomparator PK gegeben wird. Zur Erzeugung des Ist-Frequenz Pulsfolge IF wird beispielsweise eine auf dem Rotor des Gleichstrommotors M befestigte Segmentscheibe verwendet. Diese wird von einer feststehenden Lichtschranke abgetastet, wobei als Ausgangssignal eine Rechteckwechselspannung abgegeben wird.

Weiter wird an den Phasenkomparator PK vom Taktgeber TG eine Soll-Frequenz SF gegeben. Vom Drehrichtungsgeber DR wird ein erstes Drehrichtungssignal D1 an einen Eingang des Exklusiv-ODER-Verknüpfungsgliedes E gegeben. Von einem Ausgang des Phasenkomparators PK wird über das Filter F eine Referenzspannung UR an die Ansteuerschaltung AS geben. Von einem weiteren Ausgang des Phasenkomparators PK, der über einen sogenannten Pull-down-Widerstand R mit einem Bezugspotential OV verbunden ist, wird ein zweites Drehrichtungssignal D2 an den anderen Eingang des Exklusiv-ODER-Verknüpfungsgliedes E gegeben. Der Ausgang des Exklusiv-ODER-Verknüpfungsgliedes E ist ebenfalls mit der Ansteuerschaltung AS verbunden.

Der Phasenkomparator PK ist durch den handelsüblichen Baustein MC 14568 B realisiert. Die vom Taktgeber TG abgegebene Soll-Frequenz Pulsfolge SF liegt an Anschluß 14, die vom Drehzahlgeber DG abgegebene Ist-Frequenz Pulsfolge IF am Anschluß 9.

Dieser Baustein MC 14568 B gibt an seinem Anschluß 12 ein binäres Signal ab, das sowohl bei jedem Impuls des Soll-Frequenz-Pulses SF als auch bei jedem Impuls des Ist-Frequenz-Pulses IF seinen Zustand ändert. Über das dem Anschluß 12 des Phasenkomparators PK nachgeschaltete Filter F wird aus diesem binären Signal die analoge Referenzspannung UR gebildet.

Vom Anschluß 13 dieses Bausteins wird das zweite Drehrichtungssignal D2 abgegeben. Dieses Signal kann drei Pegelwerte annehmen, wobei durch den Soll-Frequenz-Puls SF diese drei Pegelwerte in entgegengesetzter Richtung durchlaufen werden wie bei dem Ist-Frequenz-Puls IF. Das heißt nach jeweils zwei gleichartigen Impulsen wird vom minimalen auf den maximalen Pegelwert bzw. umgekehrt umgeschaltet. Durch den maximalen bzw. minimalen Pegelwert ist der binäre Pegelwert des zweiten Drehrichtungssignals D2 bestimmt. Die weitere Beschaltung dieses Bausteins ist den zugehörigen Datenblättern entnehmbar.

Die Ansteuerschaltung AS kann durch den Baustein PBL 3717 realisiert sein. Am Anschluß 11 liegt die vom Filter F abgegebene Referenzspannung UR, am Anschluß 8 das Ausgangssignal des Exklusiv-ODER-Verknüpfungsgliedes E, und an den Anschlüssen 1 und 15 dieses Bausteins ist der Gleichstrommotor M angeschaltet. Die weitere Beschaltung dieses Bausteins ist den zugehörigen Datenblättern entnehmbar.

Das in Fig. 2 dargestellte Filter F besteht aus einem Operationsverstärker OP, dessen Ausgang einerseits über eine Serienschaltung aus den Widerständen R1 und R2 mit dem Bezugspotential OV und andererseits über eine Serienschaltung, bestehend aus einem Kondensator C1 und zwei Widerständen R5 und R4 mit seinem nicht invertierenden Eingang verbunden ist. Ein nicht näher bezeichnetes Ausgangssignal vom Phasenkomparator PK liegt über einen Inverter I, einen Widerstand R3 und den Widerstand R4 am nicht invertierenden Eingang des Operationsverstärkers OP an. Weiter ist der nicht invertierende Eingang über einen Kondensator C2 mit dem Bezugspotential OV, und der invertierende Eingang mit einem hier nicht näher bezeichneten Spannungsteilerpunkt zwischen den Widerständen R1 und R2 verbunden.

Das Filter F enthält also eine Kombination aus einem Integrator (mit der Zeitkonstanten $(R3 + R5) \times C1$) und einem Anpassverstärker. Dieser dient dazu, den maximalen Wert der abgegebenen Referenzspannung UR auf den Wert zu verstärken, der maximal am betreffenden Eingang der Ansteuerschaltung AS anliegen soll. Dieser Wert ist durch den maximal einstellbaren Wert des Stromes durch den Gleichstrommotor M gegeben und den Datenblättern entnehmbar.

In Fig. 3 sind das zweite Drehrichtungssignal D2 und die Referenzspannung UR in Abhängigkeit von einer Phasendifferenz P in einem Diagramm dargestellt. Die Phasendifferenz P hat den Wert O, wenn die vom Taktgeber TG abgegebene Soll-Frequenz Pulsfolge SF und die vom Drehrichtungsgeber DG abgegebene Ist-Frequenz Pulsfolge IF die gleiche Phase aufweisen. Eine Verschiebung dieser beiden Phasen ist in negativer Richtung um den Wert $2\pi$, und in positiver Richtung theoretisch um Vielfache des Wertes $2\pi$ möglich. In der Fig. 3 ist der in der Praxis vorkommende Bereich von minus $2\pi$ bis plus $2\pi$ dargestellt. Das binäre zweite Drehrichtungssignal D2 weist bei einer negativen Phasendifferenz P einen der logischen 1 entsprechenden Pegel auf, und bei einer positiven Phasendifferenz P einen der logischen O entsprechenden Pegel.

Die Referenzspannung UR weist bei positiver und bei negativer Phasendifferenz P jeweils eine steigende Gerade auf, wobei die Absolutwerte der Steigungen gleich sind.

Im folgenden wird die Wirkungsweise der in Fig. 1 dargestellten Drehzahlregelschaltung auch unter Bezugnahme auf die anderen Figuren erläutert.

Durch das vom Drehrichtungsgeber DR abgegebene binäre erste Drehrichtungssignal D1 ist die Drehrichtung des Gleichstrommotors M wählbar. Der Phasenkomparator PK vergleicht in an sich bekannter Weise die Phasenlage der beiden anliegenden Signale, der vom Taktgeber TG abgegebenen Soll-Frequenz Pulsfolge SF und der vom Drehrichtungsgeber DG abgegebenen Ist-Frequenz Pulsfolge IF. Er gibt ein binäres zweites Drehrichtungssignal D2 (s. Fig. 3) ab, d. h. ein der Richtung der Phasenabweichung entsprechendes TTL-Signal. Es liegt über das Exklusiv-ODER-Verknüpfungsglied E an der Ansteuerschaltung AS an, und bewirkt, daß der Gleichstrommotor M, in Bezug zu der gewählten Drehrichtung, beschleunigt oder abgebremst wird. Der Phasenkomparator PK gibt über das Filter F eine Referenzspannung UR an die Ansteuerschaltung AS. Die Referenzspannung UR ist eine dem Betrag der Phasenabweichung proportionale Gleichspannung. Durch diese Gleichspannung wird über die Ansteuerschaltung AS der dazu proportionale Wert des Stromes durch den Gleichstrommotor M eingestellt.

Zur Verwendung in der erfindungsgemäßen Drehzahlregelschaltung als Ansteuerschaltung AS ist jeder Baustein geeignet, der eine Wahl der Drehrichtung des angeschlossenen Gleichstrommotors M ermöglicht, und mit dem der Wert des Stromes durch diesen einstellbar ist. Beispielsweise ist hierzu der Baustein PBL 3770 verwendbar.

Als Phasenkomparator ist jeder Baustein verwendbar, der vom Betrag der Phasenlage und vom Vorzeichen der Phasendifferenz der Eingangssignale abhängige Ausgangssignale abgibt.

**Patentanspruch**

Drehzahlregelung für einen Gleichstrommotor (M) mit einem Phasenkomparator (PK), an dem eine von einem Taktgeber (TG) abgegebene Soll-Frequenz-Pulsfolge (SF) und eine von einem Drehzahlgeber (DG) abgegebene Ist-Frequenz-Pulsfolge (IF) anliegen, mit einem Filter (F) und mit einer in mindestens zwei Quadranten steuerbaren Ansteuerschaltung (AS), wobei ein binäres Richtungssignal (D2) für die Richtung des Stromes durch den Gleichstrommotor (M) entsprechend dem Vorzeichen der Phasendifferenz der Pulsfolgen gebildet wird, und wobei ein Steuersignal für den Betrag des Stromes durch eine analoge Referenzspannung (UR) gebildet wird, die vom Betrag der Phasenlage der Pulsfolgen abhängig ist, dadurch gekennzeichnet, daß zur Bildung der analogen Referenzspannung (UR) dem Filter (F) vom Phasenkomparator (PK) ein Signal zugeführt ist, das sowohl von jedem Impuls des Soll-Frequenz-Pulses (SF) als auch von jedem Impuls des Ist-Frequenz-Pulses (IF) vom Nullzustand auf den Ein-Zustand bzw. umgekehrt umgeschaltet wird, und daß zur Bildung des binären Richtungssignals (D2) der entsprechende Ausgang des Phasenkomparators (PK) durch den Soll-Frequenz-Puls (SF) bzw. den Ist-Frequenz-Puls (IF) in entgegengesetzter Richtung umgeschaltet wird, wobei eine Umschaltung nur erfolgt, wenn zwei Impulse des gleichen Pulses aufeinander folgen.

## Claim

A speed regulator for a d. c. motor (M) comprising a phase comparator (PK) to which are connected a theoretical-frequency pulse train sequence (SF) from a clock generator (TG), and a actual-frequency pulse train sequence (IF) from a speed sensor (DG), with a filter (F) and a drive circuit (AS) controlled in at least two quadrants, where a binary direction signal (D2) for the direction of the current through the d. c. motor (M) is formed in accordance with the sign of the phase difference of the pulse train sequences, and where a control signal for the amount of the current is formed by an analogue reference voltage (UR) dependent upon the value of the phase relationship of the pulse train sequences, characterised in that the analogue reference voltage (UR) is formed in that the filter (F) is supplied by the phase comparator (PK) with a signal switched over from the zero state to the one state and viceversa both by each pulse of the theoretical frequency pulse train (SF) and by each pulse of the actual frequency pulse train (IF), that the binary direction signal (D2) is formed in that the corresponding output of the phase comparator (PK) is switched over in the opposite direction by the theoretical frequency pulse train (SF) and by the actual frequency pulse train (IF), where a switchover takes place only when two pulses of the same pulse train follow one another.

## Revendication

Circuit de réglage de la vitesse de rotation pour un moteur à courant continu (M) avec un comparateur de phases (PK) auquel on applique un train d'impulsions de fréquence de consigne (SF) émis par un générateur de cadence (TG) et un train d'impulsions de fréquences instantané (IF) émis par un transmetteur de la vitesse de rotation (DG), avec un filtre (F) et avec un circuit d'attaque (AS) susceptible d'être commandé dans deux quadrants, du type dans lequel on forme un signal binaire de direction (D2), pour le sens du courant passant par le moteur à courant continu (M), en fonction du signe de la différence de phase des trains d'impulsions et dans lequel un signal de commande est formé pour la valeur du courant par une tension de référence analogique (UR) qui dépend de la valeur de la relation des phases, caractérisé par le fait que pour former la tension de référence analogique (UR), on applique aux filtres (F), en provenance du comparateur de phase, un signal qui est commuté aussi bien pour chaque impulsion du train d'impulsions de fréquence de consigne (SF) que par chaque impulsion du train d'impulsion de fréquence instantanée (IF), de son état ZERO dans son état UN, ou inversement, et que pour former le signal binaire de direction (D2), la sortie correspondante du comparateur de phase (PK) est commutée dans la direction inverse par le train d'impulsions de fréquence de consigne (SF) ou par le train d'impulsions de fréquence instantanée (IF), une commutation n'ayant lieu que si deux impulsions du même train d'impulsions (SF, IF) se suivent.

# FIG 1

# FIG 2

# FIG 3